# EUROPÄISCHE PATENTSCHRIFT

(11) **EP 2 745 503 B1**
(45) Veröffentlichungstag und Bekanntmachung des Hinweises auf die Patenterteilung: **10.08.2016**
(21) Anmeldenummer: 12728085.7
(22) Anmeldetag: 19.06.2012
(51) Int. Cl.: G09G 3/00, H04N 5/74

(54) **LASERPROJEKTIONSVORRICHTUNG UND VERFAHREN**
LASER PROJECTION DEVICE AND METHOD
DISPOSITIF DE PROJECTION LASER ET PROCÉDÉ

(30) Priorität: 16.08.2011 DE 102011081008
(43) Veröffentlichungstag der Anmeldung: 25.06.2014
(73) Patentinhaber: Robert Bosch GmbH, 70442 Stuttgart (DE)
(72) Erfinder: AL DIBS, Mohamad, Iyad, 72793 Pfullingen (DE); PUTTMANN, Christoph, 72127 Kusterdingen (DE); SLOGSNAT, David, 72074 Tuebingen (DE); FISCHER, Frank, 72810 Gomaringen (DE); REISS, Sebastian, 72768 Reutlingen (DE); KREYE, Daniel, 01139 Dresden (DE)
(86) Internationale Anmeldenummer: PCT/EP2012/061658
(87) Internationale Veröffentlichungsnummer: WO 2013/023816

(56) Entgegenhaltungen:
- US-A- 5 117 221
- US-A1- 2005 035 943
- US-A1- 2005 117 132
- ANONYMOUS: 'INTERRUPT' WIKIPEDIA, THE FREE ENCYCLOPEDIA, [Online] 07 Juli 2011, XP055190761 Gefunden im Internet: <URL:http://de.wikipedia.org/w/index.php?ti tle=Interrupt&oldid=90955709> [gefunden am 2015-05-21]

## Beschreibung

Die vorliegende Erfindung bezieht sich auf eine Laserprojektionsvorrichtung und ein Verfahren zum Projizieren von Bilddaten mit einer Laserprojektionsvorrichtung.

### Stand der Technik

Projektionsvorrichtung werden heute in einer Vielzahl von Anwendungen zur Darstellung bewegter und unbewegter Bilder eingesetzt. Beispielsweise können Projektionsvorrichtungen in Konferenzräumen oder vor Werbeflächen fest installiert sein oder die Projektionsvorrichtungen können mobile Projektionsvorrichtungen sein, welche von dem jeweiligen Benutzer kurz vor der Verwendung vor einer entsprechenden Darstellungsfläche oder Leinwand aufgebaut werden.

Um ein Bild projizieren zu können, nutzen Projektionsvorrichtungen eine Lichtquelle. Diese Lichtquelle kann zum Beispiel eine sehr helle Lampe, z.B. eine Gasentladungslampe, eine oder mehrere LEDs oder eine Laserlichtquelle sein.

Für mobile Anwendung eignen sich dabei insbesondere Laserprojektionsvorrichtungen mit einer Laserlichtquelle, da diese Laserlichtquelle mit einer geringen Baugröße aufgebaut werden kann und nur eine geringe Selbsterwärmung aufweist. Dadurch wird eine einfache Kühlung der Lichtquelle möglich.

Solche Laserprojektionsvorrichtung sind beispielsweise aus der EP 1117080 (B1) bekannt.

Wird eine Laserprojektionsvorrichtung mit einer Laserlichtquelle zur Projektion von Bilddaten eingesetzt, muss sichergestellt werden, dass die Intensität des Laserlichts, welches die Laserlichtquelle aussendet, derart gesteuert wird, dass eine Gefährdung von Personen und z.B. Tieren und insbesondere deren Augen, ausgeschlossen ist. Dazu erfassen die Laserprojektionsvorrichtungen die Entfernung zwischen einem vor der Laserprojektionsvorrichtung befindlichen Objekt und der Laserprojektionsvorrichtung und passen die Intensität des Laserlichts an die gemessene Entfernung an.

Diese Anpassung der Intensität erfolgt heute automatisch durch eine Projektionseinrichtung einer Laserprojektionsvorrichtung. Ein Anwendungsprozessor bzw. eine Anwendungssteuereinrichtung der Laserprojektionsvorrichtungen, welche beispielsweise die zu projizierenden Bildinhalte an die Projektionseinrichtung übermittelt, kann in einem Polling-Betrieb über Steuerleitungen und Datenleitungen den Inhalt von Register der Projektionseinrichtung abfragen und aus den Registern die momentane Intensität des Laserlichts und die Entfernung zwischen einem vor der Laserprojektionsvorrichtung befindlichen Objekt und der Laserprojektionsvorrichtung auslesen. In einem Polling-Betrieb fragt die Anwendungssteuereinrichtung die Register der Projektionseinrichtung in regelmäßigen Abständen ab und wertet daraufhin deren Inhalt aus.

Die US 2005/035943 A1 beschreibt eine Bildprojektionsvorrichtung, welche Mittel zum Projizieren eines Bildes auf eine Projektionsfläche durch Scannen mit einem Laserstrahl und Mittel zum Detektieren der An- oder Abwesenheit eines eindringenden Objekts zwischen den Mitteln zum Projizieren und der Projektionsfläche aufweist. Die Ausgabe-Lichtintensität der Laserprojektionsvorrichtung kann in einer Gegend verringert werden, in welcher sich das eindringende Objekt befindet.

In der US 5 117 221 A ist ein Laserbild-Projektionssystem beschrieben, welches Infrarotschranken umfasst, welche detektieren, ob sich eine Person in eine Projektionsfläche des Laserbild-Projektionssystems hineinbewegt hat.

Die US 2005/0117132 A1 beschreibt einen Laserprojektor, bei welchem eine Kamera eine Pixelmatrix von einer Projektionsfläche des Laserprojektors aufnimmt und mit den entsprechenden Bilddaten des Laserprojektors vergleicht. Ergibt der Vergleich, dass gewisse Teile der Projektionsfläche verdeckt sind, werden diese Teile des bildtragenden Laserstrahls für zumindest ein nachfolgendes Bildframe deaktiviert.

### Offenbarung der Erfindung

Die vorliegende Erdfindung offenbart eine Laserprojektionsvorrichtung mit den Merkmalen des Patentanspruchs 1 und ein Verfahren mit den Merkmalen des Patentanspruchs 9.

### Vorteile der Erfindung

Die der vorliegenden Erfindung zu Grunde liegende Erkenntnis besteht darin, dass ein energiesparender Betrieb der Laserprojektionsvorrichtung möglich ist, wenn eine Anwendungssteuereinrichtung zum Erfassung von Objekten, welche sich vor der Laserprojektionsvorrichtung befinden, nicht in einem Polling-Betrieb mit der Projektionseinrichtung kommuniziert.

Die der vorliegenden Erfindung zu Grunde liegende Idee besteht nun darin, dieser Erkenntnis Rechnung zu tragen und eine alternative Kommunikationsmöglichkeit zur Erfassung von Objekten zwischen der Anwendungssteuereinrichtung und der Projektionseinrichtung vorzusehen. Erfindungsgemäß signalisiert die Projektionseinrichtung der Anwendungssteuereinrichtung mittels eines Interruptsignals das Vorhandensein eines Objekts zwischen der Laserprojektionsvorrichtung und einer Leinwand auf die die Laserprojektionsvorrichtung ein Bild projiziert.

Die Signalisierung des Vorhandenseins eines Objekts durch ein Interruptsignal bietet den Vorteil, dass die Anwendungssteuerung nicht mehr in regelmäßigen Abständen die Register der Projektionseinrichtung abfragen muss, also nicht mehr in einem ressourcenaufwändigen Polling-Betrieb arbeiten muss. Dadurch wird der Datenverkehr zwischen der Anwendungssteuerung und der Projektionseinrichtung deutlich reduziert und der Berechnungsaufwand in der Anwendungssteuerung und der Projektionseinrichtung deutlich reduziert.

Die dadurch freigesetzten Ressourcen der Anwendungssteuerung können z.B. für Berechnungen genutzt werden, für welche in herkömmlichen Laserprojektionsvorrichtungen ein zusätzlicher Prozessor eingesetzt wird. In einer erfindungsgemäßen Laserprojektionsvorrichtung kann aber auch eine einfachere Anwendungssteuerung eingesetzt werden, wenn keine weiteren Berechnungen notwendig sind. Dadurch wird sowohl die Komplexität der Hardware als auch der Software und die Kosten einer erfindungsgemäßen Laserprojektionseinrichtung verringert.

Ferner wird es möglich, eine Anwendungssteuerung einer erfindungsgemäßen Laserprojektionsvorrichtung z.B. in einen Ruhezustand zu versetzten, während die Anwendungssteuerung keine Berechnungen durchführen muss und kein Interruptsignal von der Projektionseinrichtung ausgegeben wird. Dies ist insbesondere in mobilen Anwendungen von Vorteil, da somit der Energieverbrauch der Laserprojektionsvorrichtung gesenkt werden kann und damit z.B. eine batteriebetriebene Laserprojektionsvorrichtung mit einer Batterieladung länger betrieben werden kann.

Vorteilhafte Ausführungsformen und Weiterbildungen ergeben sich aus den Unteransprüchen sowie aus der Beschreibung unter Bezugnahme auf die Figuren.

Die Projektionseinrichtung weist eine Entfernungsmesseinrichtung auf, welche dazu ausgebildet ist, die Entfernung der Projektionseinrichtung zu zumindest einem vor der Projektionseinrichtung in Projektionsrichtung befindlichen Objekt zu erfassen. Dadurch wird es möglich, Objekte, welche sich in Projektionsrichtung vor der Laserprojektionsvorrichtung befinden, zuverlässig zu erkennen und gezielt auf das Vorhandensein eines Objekts zu reagieren.

In einer weiteren Ausführungsform weist die Projektionseinrichtung ferner eine Laserscannereinrichtung und eine Laserquelle auf, welche der Laserscannereinrichtung ein Laserlicht bereitstellt, wobei die Entfernungsmesseinrichtung dazu ausgebildet ist, die Entfernung mittels einer Laserlichtlaufzeitmessung und/oder Phasendifferenzmessung und/oder einer Zeitmessung und/oder einer Intensitätsmessung zu erfassen, und wobei die Projektionseinrichtung dazu ausgebildet ist, das Interruptsignal in Abhängigkeit von der erfassten Entfernung und/oder einer momentanen Intensität des von der Laserquelle bereitgestellten Laserlichts zu erzeugen. Wird das Laserlicht der Laserquelle zur Entfernungsmessung eingesetzt, wird eine einfache Entfernungsmessung möglich, die keine weiteren Komponenten benötigt werden. In einer Ausführungsform kann die Entfernung beispielsweise anhand der Intensität des von der Projektionsfläche oder einem Objekt reflektierten Laserlichts erfolgen.

In einer weiteren Ausführungsform kann die Entfernungsmessung eine Infrarotlichtquelle aufweisen und eine Entfernungsmessung in Abhängigkeit von der Laufzeit des Infrarotlichts durchführen. In weiteren Ausführungsformen kann eine Entfernungsmessung z.B. mittels einer Ultraschallentfernungsmessung oder dergleichen durchgeführt werden.

Wird ein Interruptsignal in Abhängigkeit von der erfassten Entfernung und/oder einer momentanen Intensität des von der Laserquelle bereitgestellten Laserlichts erzeugt, wird eine flexible Erzeugung des Interruptsignals möglich. Beispielsweise kann ein Quotient aus Intensität und Entfernung gebildet werden und für den Quotienten ein maximaler oder minimaler Wert vorgegeben werden, ab welchem ein Interruptsignal erzeugt wird.

In einer Ausführungsform weist die Projektionseinrichtung ferner eine Projektionssteuereinrichtung auf, welche dazu ausgebildet ist, die erfasste Entfernung von der Entfernungsmesseinrichtung zu empfangen und das Interruptsignal zu erzeugen und/oder die Laserscannereinrichtung und/oder die Laserquelle in Abhängigkeit von der momentanen Intensität des von der Laserquelle bereitgestellten Laserlichts und/oder der erfassten Entfernung und/oder eines maximalen oder minimalen Schwellwertes für die momentane Intensität des von der Laserquelle bereitgestellten Laserlichts bei der erfassten Entfernung zu steuern. Wird eine separate Projektionssteuereinrichtung vorgesehen, welche die Laserscannereinrichtung und/oder die Laserquelle steuert und das Interruptsignal erzeugt, wird ein modularer und flexibler Aufbau der Laserprojektionsvorrichtung möglich. Dadurch kann eine erfindungsgemäße Laserprojektionsvorrichtung flexibel an unterschiedliche Anwendungen angepasst werden.

In einer weiteren Ausführungsform ist die Entfernungsmesseinrichtung und/oder die Projektionssteuereinrichtung dazu ausgebildet mittels der Entfernungsmessung Gesten zu erfassen und zu erkennen, welche ein Benutzer vor der Projektionseinrichtung durchführt.

In einer weiteren Ausführungsform ist die Projektionssteuereinrichtung ferner dazu ausgebildet, die Laserquelle derart zu steuern, die Intensität des von der Laserquelle bereitgestellten Laserlichts automatisch zu erhöhen und/oder die Intensität des von der Laserquelle bereitgestellten Laserlichts automatisch zu verringern. Passt die Projektionssteuereinrichtung die Intensität des Laserlichts automatisch z.B. an die Entfernung zwischen der Laserprojektionsvorrichtung und einem Objekt an, kann die Intensität des Laserlichts sehr schnell angepasst werden. Tritt z.B. eine Person vor die Laserprojektionsvorrichtung kann so ein Schutz z.B. des Auges der Person sichergestellt werden. Verlässt die Person den Projektionsbereich kann die Intensität des Laserlichts auch sehr schnell wieder auf das zur Projektion gewünschte Niveau angehoben werden und so eine qualitativ hochwertige Projektion dargestellt werden. Um die Intensität des Laserlichts anpassen zu können, kann die Projektionssteuereinrichtung z.B. eine Look-Up-Tabelle (LUT) aufweisen, in welcher Paare von Entfernungswerten und korrespondierenden maximalen Intensitäten des Laserlichts abgespeichert sind, mittels welcher die Projektionssteuereinrichtung die Intensität des Laserlichts, welches die Laserquelle erzeugt, festlegt.

In einer weiteren Ausführungsform ist die Projektionssteuereinrichtung dazu ausgebildet, die Intensität des Laserlichts automatisch zu verringern. Um die Intensität des Laserlichts aber wieder zu erhöhen, ist die Projektionssteuereinrichtung aber dazu ausgebildet eine Anweisung oder ein Kommando der Anwendungssteuereinrichtung abzuwarten. Beispielsweise kann die Anwendungssteuereinrichtung eine Bestätigung von einem Benutzer abfragen, bevor sie der Projektionssteuereinrichtung die Anweisung gibt, die Intensität des Laserlichts zu erhöhen. Dadurch wird eine menschliche Kontrollinstanz ermöglicht, die ein Erhöhen der Intensität des Laserlichts genehmigen muss.

In einer weiteren Ausführungsform ist die Projektionssteuereinrichtung derart ausgebildet, die Intensität des Laserlichts nicht automatisch, sondern nur nach dem Erhalt einer Anweisung oder eines Kommandos von der Anwendungssteuereinrichtung zu erhöhen oder zu verringern. Dadurch wird eine sehr flexible Anpassung der Intensität des Laserlichts möglich, da die Anwendungssteuerung sehr flexibel programmiert werden kann und nicht unbedingt eine festgelegte LUT zum Bestimmen der Intensität nutzt.

In einer Ausführungsform weisen die Projektionssteuereinrichtung und die Anwendungssteuereinrichtung jeweils eine Interruptschnittstelle auf, über welche die Projektionssteuereinrichtung der Anwendungssteuereinrichtung das Interruptsignal bereitstellt, wobei das Interruptsignal als ein selbsthaltendes Interruptsignal oder ein nicht-selbsthaltendes Interruptsignal ausgebildet ist. Wird auf der Interruptschnittstelle sowohl ein selbsthaltendes als auch ein nicht-selbsthaltendes Interruptsignal vorgesehen, wir eine sehr flexible Anpassung der Laserprojektionsvorrichtung an unterschiedliche Anwendungen möglich. Wird von der Projektionssteuereinrichtung auf der Interruptschnittstelle ein selbsthaltendes Interruptsignal ausgegeben, kann die Anwendungssteuereinrichtung nach erhalt des Interruptsignals Berechnungen durchführen und auf das Interruptsignal reagieren und daraufhin der Projektionssteuereinrichtung eine Anweisung oder ein Kommando geben, das Interruptsignal wieder zurückzusetzen. Wird das Interruptsignal als nicht-selbsthaltendes Signal ausgeführt, ist es möglich, dass die Projektionssteuereinrichtung nach einer ersten Ausgabe des Interruptsignals ein zweites Interruptsignal ausgibt, falls das Objekt sich der Laserprojektionsvorrichtung z.B. weiter nähert. Daraufhin kann die Anwendungssteuereinrichtung die laufenden Berechnungen unterbrechen und z.B. an die neue Entfernung des Objekts zu der Laserprojektionseinrichtung anpassen. Dies ermöglicht eine schneller Reaktion auf eine geänderte Entfernung des Objekts zu der Laserprojektionsvorrichtung, erhöht aber auch den Rechenaufwand in der Anwendungssteuerung.

In einer weiteren Ausführungsform weisen die Projektionssteuereinrichtung und die Anwendungssteuereinrichtung jeweils eine Datenschnittstelle und eine Steuerschnittstelle auf über welche die Projektionssteuereinrichtung und die Anwendungssteuereinrichtung elektrisch verbunden sind, wobei die Anwendungssteuereinrichtung dazu ausgebildet ist, der Projektionssteuereinrichtung über die Datenschnittstelle Daten der zu projizierenden Bildinhalte bereitzustellen sowie über die Steuerschnittstelle die Projektionssteuereinrichtung zu steuern und/oder Zustandsinformationen von der Projektionssteuereinrichtung abzufragen. Werden getrennte Datenschnittstellen und Steuerschnittstellen zur Kommunikation zwischen der Projektionssteuereinrichtung und der Anwendungssteuereinrichtung vorgesehen, wird eine sehr effiziente Kommunikation möglich. Beispielsweise kann die Anwendungssteuereinrichtung der Projektionssteuereinrichtung über die Datenschnittstelle Daten zu den zu projizierenden Bildinhalten bereitstellen und auf der Steuerschnittstelle gleichzeitig auf Register der Projektionssteuereinrichtung zugreifen.

In einer weiteren Ausführungsform können die Datenschnittstelle und die Steuerschnittstelle als eine einzelne serielle oder parallele Datenschnittstelle ausgeführt sein.

In einer Ausführungsform ist die Projektionssteuereinrichtung als Mikrocontroller und/oder als programmgesteuerte Einrichtung und/oder als programmierbarer Logikbaustein und/oder als FPGA und/oder als ASIC ausgebildet. Zusätzlich oder alternativ ist die Anwendungssteuereinrichtung als Mikrocontroller und/oder als programmgesteuerte Einrichtung und/oder als Anwendungsprozessor und/oder als Basisbandprozessor und/oder als Grafikprozessor und/oder als programmierbarer Logikbaustein und/oder als FPGA und/oder als Computer und/oder PC ausgebildet. Dies ermöglicht einen flexiblen Aufbau einer erfindungsgemäßen Laserprojektionsvorrichtung. So können erfindungsgemäße Laserprojektionsvorrichtungen derart ausgebildet sein, dass die Anwendungssteuereinrichtung als ein Mikrocontroller ausgebildet ist, der gespeicherte kodierte oder komprimierte Bilddaten dekodiert oder dekomprimiert und der Projektionssteuereinrichtung bereitstellt. Alternativ kann eine Laserprojektionseinrichtung vorgesehen werden, bei welcher die Projektionseinrichtung und die Anwendungssteuerung in separaten Gehäusen angeordnet sind. Dabei kann die Anwendungssteuerung z.B. ein handelsüblicher PC sein. In einigen Ausführungsformen weist ein solcher handelsüblicher PC einen Schnittstellenbaustein auf, welcher die Kommunikation mit der Projektionseinrichtung durchführt. In weiteren Ausführungsformen kommuniziert ein solcher handelsüblicher PC über eine Standardschnittstelle mit der Projektionseinrichtung.

In einer Ausführungsform ist die Datenschnittstelle und/oder die Steuerschnittstelle als MIPI-konforme Schnittstelle und/oder HDMI-Schnittstelle und/oder DVI-Schnittstelle und/oder parallele 24-Bit Schnittstelle und/oder SPI-Schnittstelle und/oder I²C-Schnittstelle und/oder USB-Schnittstelle und/oder Ethernetschnittstelle ausgebildet. Zusätzlich oder alternativ ist die Interruptschnittstelle als diskrete binäre high-aktive Schnittstelle oder diskrete binäre low-aktive Schnittstelle ausgebildet. Werden Schnittstellen eingesetzt, welche etablierten Standards entsprechen, kann für den Aufbau der Laserprojektionsvorrichtung auf leicht verfügbare Standardbauteile zurückgegriffen werden und ein kostengünstiger Aufbau der Laserprojektionsvorrichtung wird möglich.

Die obigen Ausgestaltungen und Weiterbildungen lassen sich, sofern sinnvoll, beliebig miteinander kombinieren. Weitere mögliche Ausgestaltungen, Weiterbildungen und Implementierungen umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Laserprojektionsvorrichtung;
- Fig. 2: ein Ablaufdiagramm einer Ausführungsform eines erfindungsgemäßen Verfahrens;
- Fig. 3: ein Blockschaltbild einer weiteren Ausführungsform einer erfindungsgemäßen Laserprojektionsvorrichtung;
- Fig. 4: ein Diagramm eines Signalverlaufs eines selbsthaltenden Interruptsignals 10 einer Ausführungsform einer erfindungsgemäßen Projektionssteuereinrichtung 2.

In allen Figuren sind gleiche bzw. funktionsgleiche Elemente und Vorrichtungen - sofern nichts Anderes angegeben ist - mit denselben Bezugszeichen versehen worden.

### Ausführungsformen der Erfindung

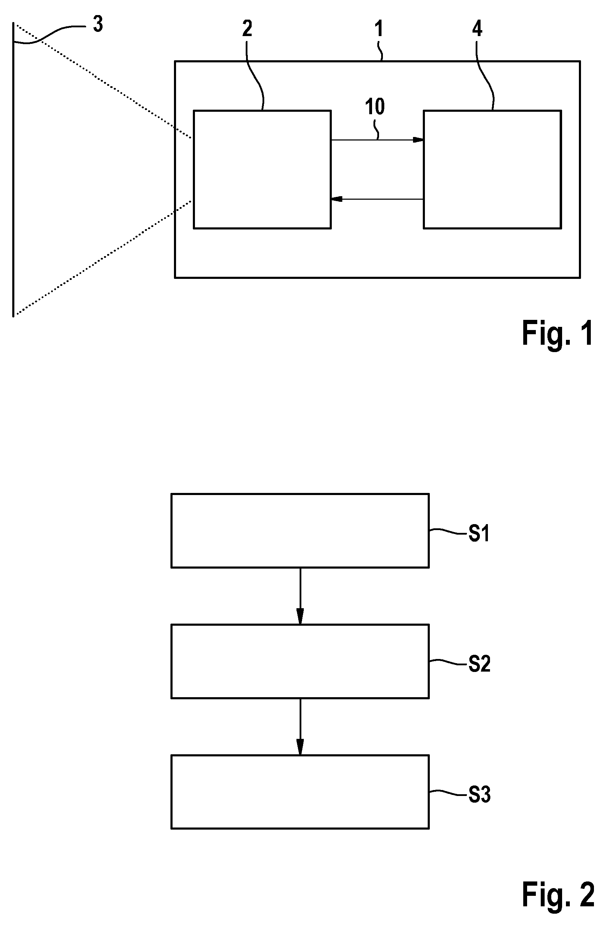

Fig. 1 zeigt ein Blockschaltbild einer Ausführungsform einer erfindungsgemäßen Laserprojektionsvorrichtung 1.

Die Laserprojektionsvorrichtung 1 weist eine Projektionseinrichtung 2 auf, welche dazu ausgebildet ist ein Bild 3 zu projizieren. Ferner weist die Laserprojektionsvorrichtung 1 eine Anwendungssteuereinrichtung 4 auf, welche als Mikrocontroller 4 ausgebildet ist. Die Projektionseinrichtung 2 ist ferner dazu ausgebildet dem Mikrocontroller 4 ein Interruptsignal 10 bereitzustellen, was in der Fig. 1 als Pfeil von der Projektionseinrichtung 2 zu dem Mikrocontroller 4 dargestellt ist. Schließlich ist der Mikrocontroller 4 dazu ausgebildet, die Projektionseinrichtung 2 zu steuern, was als Pfeil von dem Mikrocontroller 4 zu der Projektionseinrichtung 2 dargestellt ist.

In weiteren Ausführungsformen kann die Anwendungssteuereinrichtung 4 nicht als Mikro-controller 4 sondern z.B. als FPGA, CPLD, Embedded PC oder dergleichen ausgebildet sein.

In der Laserprojektionsvorrichtung 1 erfasst die Projektionseinrichtung 2 die Entfernung zwischen einem vor der Projektionseinrichtung 2 in Projektionsrichtung befindlichen Objekt und der Laserprojektionsvorrichtung 1 und erzeugt in Abhängigkeit der erfassten Entfernung das Interruptsignal 10, welches die Projektionseinrichtung 2 dem Mikrocontroller 4 bereitstellt.

Der Mikrocontroller 4 steuert in Abhängigkeit von dem Interruptsignal 10 die Projektionseinrichtung 2. Dabei kann der der Mikrocontroller 4 nach dem Erhalt eines Interruptsignals 10 z.B. Bildinhalte, welche er an die Projektionsanrichtung übermittelt, anpassen, um anzuzeigen, dass ein Objekt erkannt wurde.

In weiteren Ausführungsformen kann in der Anwendungssteuerung 4 auch eine eigene Bedien- und Anzeigeeinrichtung angeordnet sein, über welche die Anwendungssteuerung 4 anzeigt, dass ein Objekt erkannt wurde.

Fig. 2 zeigt ein Ablaufdiagramm einer Ausführungsform eines erfindungsgemäßen Verfahrens.

In einem ersten Schritt S1 wird ein Bild 3 mittels einer Projektionseinrichtung 2 projiziert. In einem weiteren Schritt S2 wird ein Interruptsignal 10 in Abhängigkeit von einer Entfernung der Projektionseinrichtung 2 zu zumindest einem vor der Projektionseinrichtung 2 in Projektionsrichtung befindlichen Objekt erzeugt. In einem letzten Schritt S3 wird die Projektionseinrichtung 2 in Abhängigkeit von dem Interruptsignal 10 gesteuert.

Beim Steuern S3 der Projektionseinrichtung 2 kann die Projektionseinrichtung 2 derart gesteuert werden, dass sie bestimmte Bildinhalte anzeigt, die Intensität des Laserlichts, mit welchem die Projektionseinrichtung ein Bild projiziert, verringert oder erhöht oder dass die Registerinhalte einer Projektionssteuereinrichtung 8 der Projektionseinrichtung 2 ausgelesen und/oder geändert werden.

Die Register der Projektionssteuereinrichtung 8 können Register sein, welche Daten über ein erkanntes Objekt, wie z.B. die Entfernung des Objekts zur Laserprojektionsvorrichtung, die Größe des Objekts, eine von dem Objekt ausgeführte Geste oder dergleichen aufweisen. Ferner können die Register Daten über die momentane Intensität des Laserlichts oder andere Zustandsinformationen über die Projektionseinrichtung 2 aufweisen.

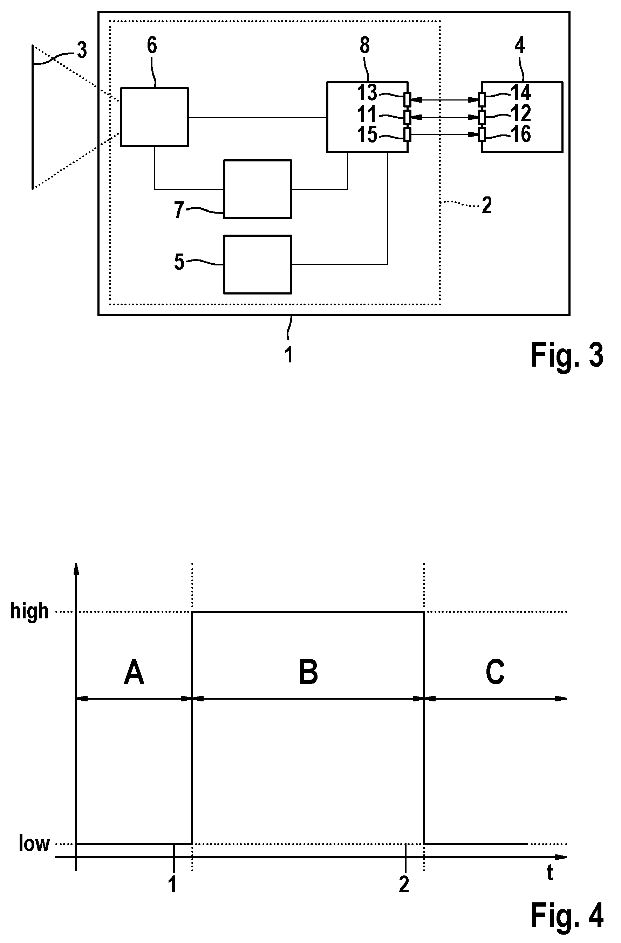

Fig. 3 zeigt ein Blockschaltbild einer weiteren Ausführungsform einer erfindungsgemäßen Laserprojektionsvorrichtung 1.

Die Laserprojektionsvorrichtung 1 aus Fig. 3 unterscheidet sich von der Laserprojektionsvorrichtung 1 aus Fig. 1 dahingehend, dass die Projektionseinrichtung 2 eine Entfernungsmesseinrichtung 5 aufweist, welche mit einer Projektionssteuereinrichtung 8 gekoppelt ist. Ferner weist die Projektionseinrichtung 2 in Fig. 3 eine Laserscannereinrichtung 6 auf, welche mit einer Laserquelle 7 gekoppelt ist, wobei die Laserquelle 7 ebenfalls mit der Projektionssteuereinrichtung 8 gekoppelt ist. Schließlich weisen die Anwendungssteuereinrichtung 4 und die Projektionssteuereinrichtung 8 jeweils eine Interruptschnittstelle 15, 16, eine Datenschnittstelle 11, 12 und eine Steuerschnittstelle 13, 14 auf. Dabei ist die Verbindung zwischen den Interruptschnittstellen 15, 16 als unidirektionale Verbindung durch einen Pfeil von der Projektionssteuereinrichtung 8 zu der Anwendungssteuerung 4, die Verbindung zwischen den Datenschnittstellen 11, 12 als bidirektionale Verbindung durch einen Pfeil mit einer Spitze an jede Ende und die Verbindung zwischen den Steuerschnittstellen 13, 14 als bidirektionale Verbindung ebenfalls mit einem Pfeil mit einer Spitze an jede Ende dargestellt.

In einer Ausführungsform können die Laserscannereinrichtung 6 und die Laserquelle 7 als eine integrierte Komponente ausgeführt sein. In einer weiteren Ausführungsform kann die Laserquelle 7 als externe Laserquelle 7 ausgeführt sein und z.B. über einen Lichtleiter mit der Laserscannereinrichtung 6 verbunden sein.

In der Ausführungsform der Fig. 3 ist die Projektionssteuereinrichtung 8 als FPGA oder ASIC ausgeführt, welcher derart konfiguriert ist, die Steuerung der Laserquelle 7 und der Laserscannereinrichtung 6 durchzuführen, eine erfasste Entfernung von der Entfernungsmesseinrichtung 5 entgegenzunehmen und ein Interruptsignal 10 zu erzeugen sowie mit einer Anwendungssteuerung 4 zu kommunizieren.

Fig. 4 zeigt ein Diagramm eines Signalverlaufs eines selbsthaltenden Interruptsignals 10 einer Ausführungsform einer erfindungsgemäßen Projektionssteuereinrichtung 2.

In dem Diagramm in Fig. 4 ist auf der Abszissenachse die Zeit t und auf der Ordinatenachse der logische Pegel, in Form zweier Zustände "low" und "high", des Interruptsignals 10 aufgetragen. Das Diagramm ist nach der Abszissenachse in drei Zeitbereiche A, B und C unterteilt. Der Pegel des Interruptsignals 10 verläuft in dem ersten mit A markierten Bereich bei "low". An der Abszissenachse ist ein erster Zeitpunkt 1 kurz vor dem Ende des ersten Bereichs A angetragen, zu welchem die Entfernungsmessungseinrichtung 5 der Laserprojektionsvorrichtung 1 ein Objekt erfasst. Nach einer kurzen Verarbeitungszeit, die etwa einem Zehntel des Bereichs A entspricht, springt der Pegel des Interruptsignals 10 auf "high" und verweilt in dem gesamten Bereich B, der ca. doppelt so lang ist, wie der Bereich A, auf "high". Kurz vor Ende des zweiten Bereichs B ist ein zweiter Zeitpunkt 2 an der Abszissenachse angetragen. Zu diesem Zeitpunkt hat die Anwendungssteuerung 4 ihre Berechnungen beendet und erteilt der Projektionssteuerung 8 eine Anweisung oder ein Kommando, den Interrupt freizugeben und damit das Interruptsignal auf "low" zu setzen. Erneut nach einer kurzen Verarbeitungszeit, die etwa der ersten Verarbeitungszeit entspricht, springt der Pegel des Interruptsignals 10 zurück auf "low" und verbleibt für die Dauer des Bereichs C auf diesem Pegel. Die logische Pegel "high" und "low" können in unterschiedlichen Ausführungsformen als unterschiedliche Spannungen realisiert werden. Beispielsweise kann in einer Ausführungsform der Pegel "high" eine Spannung von 5V und der Pegel "low" eine Spannung von 0V oder umgekehrt sein. In einigen Ausführungsformen können auch Spannungsbereiche für die Pegel "high" und "low" vorgesehen werden.

Während der Pegel des Interruptsignals 10 für die Zeitdauer des Bereichs B "high", also aktiv ist, kann die Anwendungssteuerung z.B. die Register der Projektionssteuerung 8 auslesen und basierend auf den ausgelesenen Informationen die Projektionssteuerung 8 steuern.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann eine Ausführungsform einer erfindungsgemäßen Laserprojektionsvorrichtung zur Raumüberwachung eingesetzt werden. Dazu überwacht die Projektionseinrichtung einen Raum mittels der Entfernungsmessung auf das Eindringen beweglicher Objekte und meldet ein solches Eindringen der Anwendungssteuereinrichtung mittels einem Interruptsignal, die daraufhin eine geeignete Reaktion einleitet. Solange die Projektionseinrichtung kein Eindringen erkannt hat, verweilt die Anwendungssteuereinrichtung in einem Ruhezustand. Dadurch wird eine besonders energieeffiziente Raumüberwachung möglich.

Ferner kann mittels einer Ausführungsform einer erfindungsgemäßen Laserprojektionsvorrichtung eine Entfernungsüberwachung durchgeführt werden.

In einer weiteren Anwendung kann eine Interaktion mit der Laserprojektionseinrichtung mittels einer Gestenerkennung stattfinden. Dazu erfasst die Projektionseinrichtung mittels der Entfernungsmessung Gesten von Personen, welche sich vor der Laserprojektionsvorrichtung befinden und übermittelt der Anwendungssteuereinrichtung ein Interruptsignal, wenn eine gültige Geste erkannt wurde. Die Anwendungssteuerung kann daraufhin aus den Registern der Projektionssteuereinrichtung die Art der erkannten Geste auslesen und eine entsprechende Reaktion einleiten. Auch hier kann die Anwendungssteuereinrichtung in einem Ruhezustand verweilen bis eine Geste erkannt wird. Dadurch eignet sich die vorliegende Erfindung insbesondere für mobile Anwendung, welche durch Batterien mit elektrischer Energie versorgt werden.

## Patentansprüche

1. Laserprojektionsvorrichtung
mit einer Projektionseinrichtung (2), wobei die Projektionseinrichtung (2) dazu ausgebildet ist, ein Bild (3) zu projizieren und in Abhängigkeit von einer Messung, welche einen Rückschluss auf die Entfernung der Projektionseinrichtung (2) zu zumindest einem vor der Projektionseinrichtung (2) in Projektionsrichtung befindlichen Objekt zulässt, ein erstes Interruptsignal (10) zu erzeugen, welches als nicht-selbsthaltendes Signal ausgeführt ist; und mit einer Anwendungssteuereinrichtung (4), welche dazu ausgebildet ist, die Projektionseinrichtung (2) in Abhängigkeit von dem ersten Interruptsignal (10) zu steuern, wobei die Projektionseinrichtung (2) eine Entfernungsmesseinrichtung (5) aufweist, welche dazu ausgebildet ist, die Entfernung der Projektionseinrichtung (2) zu zumindest einem vor der Projektionseinrichtung (2) in Projektionsrichtung befindlichen Objekt zu erfassen;
wobei die Projektionseinrichtung (2) ferner eine Projektionssteuereinrichtung (8) aufweist, welche dazu ausgebildet ist, die erfasste Entfernung von der Entfernungsmesseinrichtung (5) zu empfangen und das erste Interruptsignal (10) zu erzeugen;
wobei die Projektionssteuereinrichtung (8) dazu ausgebildet ist, nach einer Ausgabe des ersten Interruptsignals (10) ein zweites Interruptsignal auszugeben, falls das Objekt sich der Laserprojektionsvorrichtung weiter nähert;
**dadurch gekennzeichnet, dass**
die Anwendungssteuereinrichtung (4) dazu ausgebildet ist, als Reaktion auf das zweite Interruptsignal laufende Berechnungen zu unterbrechen und an eine neue Entfernung des Objekts zu der Laserprojektionsvorrichtung anzupassen.

2. Laserprojektionsvorrichtung nach Anspruch 1,
**dadurch gekennzeichnet,**
**dass** die Projektionseinrichtung (2) ferner eine Laserscannereinrichtung (6) und eine Laserquelle (7) aufweist, welche der Laserscannereinrichtung (6) ein Laserlicht bereitstellt, wobei die Entfernungsmesseinrichtung (5) dazu ausgebildet ist, die Entfernung mittels einer Laserlichtlaufzeitmessung und/oder Phasendifferenzmessung und/oder einer Intensitätsmessung von Laserlicht zu erfassen, und wobei die Projektionseinrichtung (2) dazu ausgebildet ist, das erste Interruptsignal (10) in Abhängigkeit von der erfassten Entfernung und/oder einer momentanen Intensität des von der Laserquelle (7) bereitgestellten Laserlichts zu erzeugen.

3. Laserprojektionsvorrichtung nach einem der Ansprüche 1 oder 2,
**dadurch gekennzeichnet,**
**dass** die Projektionssteuereinrichtung (8) dazu ausgebildet ist, die Laserscannereinrichtung (6) und/oder die Laserquelle (7) in Abhängigkeit von der momentanen Intensität des von der Laserquelle (7) bereitgestellten Laserlichts und/oder der erfassten Entfernung und/oder eines maximalen oder minimalen Schwellwertes für die momentane Intensität des von der Laserquelle (7) bereitgestellten Laserlichts bei der erfassten Entfernung zu steuern.

4. Laserprojektionsvorrichtung nach Anspruch 3,
**dadurch gekennzeichnet,**
**dass** die Projektionssteuereinrichtung (8) ferner dazu ausgebildet ist, die Laserquelle (7) basierend auf der erfassten Entfernung derart zu steuern, dass die Laserquelle (7) die Intensität des von der Laserquelle (7) bereitgestellten Laserlichts automatisch erhöht und/oder die Intensität des von der Laserquelle (7) bereitgestellten Laserlichts automatisch verringert.

5. Laserprojektionsvorrichtung nach einem der Ansprüche 3 oder 4,
**dadurch gekennzeichnet,**
**dass** die Projektionssteuereinrichtung (8) und die Anwendungssteuereinrichtung (4) jeweils eine Interruptschnittstelle (15, 16) aufweisen, über welche die Projektionssteuereinrichtung (8) der Anwendungssteuereinrichtung (4) das erste Interruptsignal (10) bereitstellt.

6. Laserprojektionsvorrichtung nach einem der Ansprüche 3 bis 5,
**dadurch gekennzeichnet,**
**dass** die Projektionssteuereinrichtung (8) und die Anwendungssteuereinrichtung (4) jeweils eine Datenschnittstelle (11, 12) und eine Steuerschnittstelle (13, 14) aufweisen, über welche die Projektionssteuereinrichtung (8) und die Anwendungssteuereinrichtung (4) elektrisch verbunden sind, wobei die Anwendungssteuereinrichtung (4) ferner dazu ausgebildet ist, der Projektionssteuereinrichtung (8) über die Datenschnittstelle (11, 12) Daten der zu projizierenden Bildinhalte bereitzustellen sowie über die Steuerschnittstelle (13, 14) die Projektionssteuereinrichtung (8) zu steuern und/oder Zustandsinformationen von der Projektionssteuereinrichtung (8) abzufragen.

7. Laserprojektionsvorrichtung nach einem der Ansprüche 3 bis 6,
**dadurch gekennzeichnet,**
**dass** die Projektionssteuereinrichtung (8) als Mikrocontroller oder als programmierbarer Logikbaustein oder als FPGA oder als ASIC ausgebildet ist; und/oder dass die Anwendungssteuereinrichtung (4) als Mikrocontroller oder als Anwendungsprozessor oder als Grafikprozessor oder als programmierbarer Logikbaustein oder als FPGA oder als Computer ausgebildet ist.

8. Laserprojektionsvorrichtung nach einem der Ansprüche 6 oder 7,
**dadurch gekennzeichnet,**
**dass** die Datenschnittstelle (11, 12) und/oder die Steuerschnittstelle (13, 14) als HDMI-Schnittstelle oder DVI-Schnittstelle oder parallele 24-Bit Schnittstelle oder SPI-Schnittstelle oder I²C-Schnittstelle oder USB-Schnittstelle oder Ethernetschnittstelle ausgebildet ist; und/oder
**dass** eine Interruptschnittstelle (15, 16), über welche die Projektionssteuereinrichtung (8) der Anwendungssteuereinrichtung (4) das erste Interruptsignal (10) bereitstellt, als diskrete binäre high-aktive Schnittstelle oder diskrete binäre low-aktive Schnittstelle ausgebildet ist.

9. Verfahren zum Projizieren von Bilddaten, insbesondere mit einer Laserprojektionsvorrichtung nach einem der Ansprüche 1 - 8, mit den Schritten:
Projizieren (S1) eines Bildes (3) mittels einer Projektionseinrichtung (2);
Erzeugen (S2) eines ersten Interruptsignals (10) in Abhängigkeit von einer Entfernung der Projektionseinrichtung (2) zu zumindest einem vor der Projektionseinrichtung (2) in Projektionsrichtung befindlichen Objekt als nicht-selbsthaltendes Signal;
Steuern (S3) der Projektionseinrichtung (2) in Abhängigkeit von dem ersten Interruptsignal (10) durch eine Anwendungssteuereinrichtung (4);
wobei das Erzeugen (S2) des ersten Interruptsignals (10) das Erfassen einer Entfernung der Projektionseinrichtung (2) zu zumindest einem vor der Projektionseinrichtung (2) in Projektionsrichtung befindlichen Objekt und das Erzeugen eines Interruptsignals (10) in Abhängigkeit von der erfassten Entfernung aufweist;
Ausgeben eines zweiten Interruptsignals nach Ausgabe des ersten Interruptsignals (10) durch eine Projektionssteuereinrichtung (8) der Projektionseinrichtung (2), falls das Objekt sich der Laserprojektionsvorrichtung weiter nähert;
**dadurch gekennzeichnet, dass** das Verfahren darüber hinaus folgenden Schritt umfasst:
Unterbrechen von laufenden Berechnungen der Anwendungssteuereinrichtung (4) als Reaktion auf das zweite Interruptsignal und Anpassen der laufenden Berechnungen an eine neue Entfernung des Objekts zu der Laserprojektionsvorrichtung.

10. Verfahren nach Anspruch 9,
wobei ein Bild mittels einer Laserscannereinrichtung (6) und einer Laserquelle (7) projiziert wird und die Entfernung mittels einer Laserlichtlaufzeitmessung erfasst wird, wobei das erste Interruptsignal (10) in Abhängigkeit von der erfassten Entfernung und/oder einer momentanen Intensität des von der Laserquelle (7) bereitgestellten Laserlichts erzeugt wird.

11. Verfahren nach zumindest einem der Ansprüche 9 oder 10,
wobei das Steuern (S3) der Projektionseinrichtung (2) das Steuern der Laserscannereinrichtung (6) und/oder der Laserquelle (7) in Abhängigkeit von der erfassten Entfernung und/oder einer momentanen Intensität des von der Laserquelle (7) bereitgestellten Laserlichts und/oder von einem maximalen oder minimalen Schwellwert für die momentane Intensität des von der Laserquelle (7) bereitgestellten Laserlichts bei der erfassten Entfernung aufweist.

12. Verfahren nach zumindest einem der Ansprüche 9 bis 11,
wobei das Steuern der Laserscannereinrichtung (6) und/oder der Laserquelle (7) ein automatisches Erhöhen der Intensität des von der Laserquelle (7) bereitgestellten Laserlichts und/oder ein automatisches Verringern der Intensität des von der Laserquelle (7) bereitgestellten Laserlichts aufweist.

## Claims

1. Laser projection apparatus
having a projection device (2), wherein the projection device (2) is configured to project an image (3) and to generate a first interrupt signal (10), which is in the form of a non-latched signal, in dependence on a measurement which allows a determination to be made about the distance of the projection device (2) from at least one object that is located upstream of the projection device (2) in the projection direction; and having an application control device (4), which is configured to control the projection device (2) in dependence on the first interrupt signal (10), wherein the projection device (2) has a distance measurement device (5) that is configured to capture the distance of the projection device (2) from at least one object that is located upstream of the projection device (2) in the projection direction;
wherein the projection device (2) furthermore has a projection control device (8) which is configured to receive the captured distance from the distance measurement device (5) and to generate the first interrupt signal (10);
wherein the projection control device (8) is configured to output a second interrupt signal after the first interrupt signal (10) has been output if the object continues to approach the laser projection apparatus;
**characterized in that**
the application control device (4) is configured to interrupt running calculations in response to the second interrupt signal and to match them to a new distance of the object from the laser projection apparatus.

2. Laser projection apparatus according to Claim 1,
**characterized**
**in that** the projection device (2) furthermore has a laser scanner device (6) and a laser source (7) which provides a laser light for the laser scanner device (6), wherein the distance measurement device (5) is configured to capture the distance using a laser light time-of-flight measurement and/or phase difference measurement and/or an intensity measurement of laser light, and wherein the projection device (2) is configured to generate the first interrupt signal (10) in dependence on the captured distance and/or an instantaneous intensity of the laser light provided by the laser source (7).

3. Laser projection apparatus according to either of Claims 1 and 2,
**characterized**
**in that** the projection control device (8) is configured to control the laser scanner device (6) and/or the laser source (7) in dependence on the instantaneous intensity of the laser light provided by the laser source (7) and/or of the captured distance and/or of a maximum or minimum threshold value for the instantaneous intensity of the laser light provided by the laser source (7) at the captured distance.

4. Laser projection apparatus according to Claim 3, **characterized**
**in that** the projection control device (8) is furthermore configured to control the laser source (7) on the basis of the captured distance such that the laser source (7) automatically increases the intensity of the laser light provided by the laser source (7) and/or automatically reduces the intensity of the laser light provided by the laser source (7).

5. Laser projection apparatus according to either of Claims 3 and 4,
**characterized in that** the projection control device (8) and the application control device (4) in each case have an interrupt interface (15, 16), via which the projection control device (8) makes available the first interrupt signal (10) to the application control device (4).

6. Laser projection apparatus according to one of Claims 3 to 5,
**characterized in that** the projection control device (8) and the application control device (4) in each case have a data interface (11, 12) and a control interface (13, 14) via which the projection control device (8) and the application control device (4) are electrically connected, wherein the application control device (4) is furthermore configured to make available data of the image contents to be projected to the projection control device (8) via the data interface (11, 12) and to control the projection control device (8) via the control interface (13, 14) and/or to request status information from the projection control device (8).

7. Laser projection apparatus according to one of Claims 3 to 6,
**characterized in that** the projection control device (8) is configured as a microcontroller or as a programmable logic module or as an FPGA or as an ASIC; and/or
**in that** the application control device (4) is configured as a microcontroller or as an application processor or as a graphics processor or as a programmable logic module or as an FPGA or as a computer.

8. Laser projection apparatus according to either of Claims 6 and 7,
**characterized in that** the data interface (11, 12) and/or the control interface (13, 14) is configured as a HDMI interface or DVI interface or parallel 24 bit interface or SPI interface or I²C interface or USB interface or Ethernet interface; and/or
**in that** an interrupt interface (15, 16), via which the projection control device (8) makes available the first interrupt signal (10) to the application control device (4), is configured as a discrete binary active-high interface or discrete binary active-low interface.

9. Method for projecting image data, in particular having a laser projection apparatus according to one of Claims 1-8, comprising the steps:
projecting (S1) an image (3) using a projection device (2);
generating (S2) a first interrupt signal (10) in dependence on a distance of the projection device (2) from at least one object that is located upstream of the projection device (2) in the projection direction as a non-latched signal;
controlling (S3) the projection device (2) in dependence on the first interrupt signal (10) by way of an application control device (4);
wherein generating (S2) the first interrupt signal (10) includes capturing a distance of the projection device (2) from at least one object that is located upstream of the projection device (2) in the projection direction and generating an interrupt signal (10) in dependence on the captured distance;
outputting a second interrupt signal after the first interrupt signal (10) has been output by way of a projection control device (8) of the projection device (2) if the object continues to approach the laser projection apparatus;
**characterized in that** the method moreover comprises the following step:
interrupting running calculations of the application control device (4) in response to the second interrupt signal and matching the running calculations to a new distance of the object from the laser projection apparatus.

10. Method according to Claim 9,
wherein an image is projected using a laser scanner device (6) and a laser source (7) and the distance is captured using a laser light time-of-flight measurement, wherein the first interrupt signal (10) is generated in dependence on the captured distance and/or an instantaneous intensity of the laser light provided by the laser source (7).

11. Method according to at least one of Claims 9 and 10,
wherein controlling (S3) the projection device (2) includes controlling the laser scanner device (6) and/or the laser source (7) in dependence on the captured distance and/or an instantaneous intensity of the laser light provided by the laser source (7) and/or a maximum or minimum threshold value for the instantaneous intensity of the laser light provided by the laser source (7) at the captured distance.

12. Method according to at least one of Claims 9 to 11,
wherein controlling the laser scanner device (6) and/or the laser source (7) includes automatically increasing the intensity of the laser light provided by the laser source (7) and/or automatically reducing the intensity of the laser light provided by the laser source (7).

## Revendications

1. Dispositif de projection à laser comprenant un appareil de projection (2), l'appareil de projection (2) étant configuré pour projeter une image (3) et pour générer, en fonction d'une mesure qui permet une déduction de la distance de l'appareil de protection (2) par rapport à au moins un objet se trouvant devant l'appareil de projection (2) dans le sens de la projection, un premier signal d'interruption (10) qui est réalisé sous la forme d'un signal non auto-maintenu ; et
comprenant un appareil de commande d'application (4) qui est configuré pour commander l'appareil de projection (2) en fonction du premier signal d'interruption (10),
l'appareil de projection (2) possédant un appareil de télémétrie (5) qui est configuré pour détecter la distance de l'appareil de projection (2) par rapport à au moins un objet se trouvant devant l'appareil de projection (2) dans le sens de la projection ;
l'appareil de projection (2) possédant en outre un appareil de commande de projection (8) qui est configuré pour recevoir la distance détectée par l'appareil de télémétrie (5) et générer le premier signal d'interruption (10) ;
l'appareil de commande de projection (8) étant configuré pour délivrer un deuxième signal d'interruption après une délivrance du premier signal d'interruption (10) dans le cas où l'objet se rapproche davantage du dispositif de projection à laser ;
**caractérisé en ce que**
l'appareil de commande d'application (4) est configuré pour interrompre les calculs en cours en réaction au deuxième signal d'interruption et les adapter à une nouvelle distance de l'objet par rapport au dispositif de projection à laser.

2. Dispositif de projection à laser selon la revendication 1, **caractérisé en ce que** l'appareil de projection (2) possède en outre un appareil de balayage à laser (6) et une source laser (7), laquelle met à disposition de l'appareil de balayage à laser (6) une lumière laser, l'appareil de télémétrie (5) étant configuré pour détecter la distance au moyen d'une mesure du temps de propagation de la lumière laser et/ou d'une mesure de la différence de phase et/ou d'une mesure de l'intensité de la lumière laser, et l'appareil de projection (2) étant configuré pour générer le premier signal d'interruption (10) en fonction de la distance détectée et/ou d'une intensité momentanée de la lumière laser mise à disposition par la source laser (7).

3. Dispositif de projection à laser selon l'une des revendications 1 ou 2, **caractérisé en ce que** l'appareil de commande de projection (8) est configuré pour commander l'appareil de balayage à laser (6) et/ou la source laser (7) en fonction de l'intensité momentanée de la lumière laser mise à disposition par la source laser (7) et/ou de la distance détectée et/ou d'une valeur de seuil maximale ou minimale pour l'intensité momentanée de la lumière laser mise à disposition par la source laser (7) à la distance détectée.

4. Dispositif de projection à laser selon la revendication 3, **caractérisé en ce que** l'appareil de commande de projection (8) est en outre configuré pour commander la source laser (7) en se basant sur la distance détectée de telle sorte que la source laser (7) augmente automatiquement l'intensité de la lumière laser mise à disposition par la source laser (7) et/ou réduit automatiquement l'intensité de la lumière laser mise à disposition par la source laser (7).

5. Dispositif de projection à laser selon l'une des revendications 3 ou 4, **caractérisé en ce que** l'appareil de commande de projection (8) et l'appareil de commande d'application (4) possèdent respectivement une interface d'interruption (15, 16) par le biais de laquelle l'appareil de commande de projection (8) met le premier signal d'interruption (10) à disposition de l'appareil de commande d'application (4).

6. Dispositif de projection à laser selon l'une des revendications 3 à 5, **caractérisé en ce que** l'appareil de commande de projection (8) et l'appareil de commande d'application (4) possèdent respectivement une interface de données (11, 12) et une interface de commande (13, 14), par le biais de laquelle l'appareil de commande de projection (8) et l'appareil de commande d'application (4) sont reliés électriquement, l'appareil de commande d'application (4) étant en outre configuré pour mettre à disposition de l'appareil de commande de projection (8) par le biais de l'interface de données (11, 12) des données du contenu d'image à projeter ainsi que pour commander l'appareil de commande de projection (8) par le biais de l'interface de commande (13, 14) et/ou interroger des informations d'état auprès de l'appareil de commande de projection (8).

7. Dispositif de projection à laser selon l'une des revendications 3 à 6, **caractérisé en ce que** l'appareil de commande de projection (8) est réalisé sous la forme d'un microcontrôleur ou d'un composant logique programmable ou d'un FPGA ou d'un ASIC ; et/ou **en ce que** l'appareil de commande d'application (4) est réalisé sous la forme d'un microcontrôleur ou d'un processeur d'application ou d'un processeur graphique ou d'un composant logique programmable ou d'un FPGA ou d'un ordinateur.

8. Dispositif de projection à laser selon l'une des revendications 6 ou 7, **caractérisé en ce que** l'interface de données (11, 12) et/ou l'interface de commande (13, 14) est réalisée sous la forme d'une interface HDMI ou d'une interface DVI ou d'une interface parallèle à 24 bits ou d'une interface SPI ou d'une interface I²C ou d'une interface USB ou d'une interface Ethernet ; et/ou **en ce qu'**une interface d'interruption (15, 16), par le biais de laquelle l'appareil de commande de projection (8) met le premier signal d'interruption (10) à disposition de l'appareil de commande d'application (4), est réalisée sous la forme d'une interface binaire discrète active au niveau haut ou d'une interface binaire discrète active au niveau bas.

9. Procédé de projection de données d'image, notamment avec un dispositif de projection à laser selon l'une des revendications 1 à 8, comprenant les étapes suivantes :
projection (S1) d'une image (3) au moyen d'un appareil de projection (2) ;
génération (S2) d'un premier signal d'interruption (10), sous la forme d'un signal non auto-maintenu, en fonction d'une distance de l'appareil de projection (2) par rapport à au moins un objet se trouvant devant l'appareil de projection (2) dans le sens de la projection ;
commande (S3) de l'appareil de projection (2) en fonction du premier signal d'interruption (10) par un appareil de commande d'application (4) ;
la génération (S2) du premier signal d'interruption (10) présentant la détection d'une distance de l'appareil de projection (2) par rapport à au moins un objet se trouvant devant l'appareil de projection (2) dans le sens de la projection et la génération d'un signal d'interruption (10) en fonction de la distance détectée ;
délivrance d'un deuxième signal d'interruption après la délivrance du premier signal d'interruption (10) par un appareil de commande de projection (8) de l'appareil de projection (2) dans le cas où l'objet se rapproche davantage du dispositif de projection à laser ;
**caractérisé en ce que** le procédé comprend en outre l'étape suivante :
interruption des calculs en cours de l'appareil de commande d'application (4) en réaction au deuxième signal d'interruption et adaptation des calculs en cours à une nouvelle distance de l'objet par rapport au dispositif de projection à laser.

10. Procédé selon la revendication 9, selon lequel une image est projetée au moyen d'un appareil de balayage à laser (6) et d'une source laser (7) et la distance est détectée au moyen d'une mesure du temps de propagation de la lumière, laser, le premier signal d'interruption (10) étant généré en fonction de la distance détectée et/ou d'une intensité momentanée de la lumière laser mise à disposition par la source laser (7).

11. Procédé selon au moins l'une des revendications 9 ou 10, selon lequel la commande (S3) de l'appareil de projection (2) présente la commande de l'appareil de balayage à laser (6) et/ou de la source laser (7) en fonction de la distance détectée et/ou d'une intensité momentanée de la lumière laser mise à disposition par la source laser (7) et/ou d'une valeur de seuil maximale ou minimale pour l'intensité momentanée de la lumière laser mise à disposition par la source laser (7) à la distance détectée.

12. Procédé selon au moins l'une des revendications 9 à 11, selon lequel la commande de l'appareil de balayage à laser (6) et/ou de la source laser (7) présente une augmentation automatique de l'intensité de la lumière laser mise à disposition par la source laser (7) et/ou une réduction automatique de l'intensité de la lumière laser mise à disposition par la source laser (7).
